# EUROPEAN PATENT APPLICATION

(11) **EP 1 396 962 A1**
(43) Date of publication of application: **10.03.2004**
(21) Application number: 02017621.0
(22) Date of filing: 05.08.2002
(51) Int. Cl.: H04L 12/28

(54) **Bus service interface**

(71) Applicant: Sony International (Europe) GmbH, 10785 Berlin (DE)
(72) Inventor: Krusche, Arnd, Adv. Tech. Ctr. Stuttgart, 70327 Stuttgart (DE); Wilde, Matthias, Advanced Techn. Ctr. Stuttgart, 70327 Stuttgart (DE); Hagg, Wilhelm, Advanced Techn. Ctr. Stuttgart, 70327 Stuttgart (DE); Mosig, Rüdiger, Advanced Techn. Ctr. Stuttgart, 70327 Stuttgart (DE)
(74) Representative: Müller - Hoffmann & Partner

(57) **Abstract**

According to the present invention, for connecting the different bus systems to each other to build a superior network, a common network layer is provided to which the bus systems are connected for data and/or control exchange via gateway devices. Further, an intelligent gateway according to the present invention is distributed in the network, i.e. on the common network layer to which the gateway devices according to the present invention are connected. So this intelligent gateway can be accessed on all gateway devices. This allows the incorporation of cheap (dumb) gateway devices, which just provide the bus API, i.e. a bus service interface. Device specific (software) modules can run distributed on other intelligent gateway devices or on the intelligent gateway.

## Description

The present invention relates to a superior network that connects and communicates between at least a first and a second bus system, i.e. wired or wireless communication system. In particular, the present invention relates to an intelligent gateway for communicating between gateway devices that respectively connect a respective bus system with a common network layer, a gateway device comprising a bus service interface for communicating via a common network layer, and a superior network comprising an intelligent gateway, preferably within a gateway device, and gateway devices according to the present invention.

In networks consisting of a plurality of devices each device has for external connection and communication a bus system or wired or wireless communication system, in the following simply referred to as bus system.

For connecting different of said bus systems a so-called gateway, gateway device or bridge device, in the following simply referred to as gateway device, is necessary to make the formats and rates of exchanged stream data, control data and/or the like compatible with each other. Such gateway devices have a dedicated architecture mapping the input messages/data streams to output messages/data streams, i.e. at least two physical network adapters. Conventionally, each gateway device has fixed properties with respect to the bus systems to be connected.

Therefore, conventionally, ensuring flexibility and reliability when building-up networks of changing architectures is a difficult task when using conventional gateway devices or bridge devices.

Therefore, according to the European Patent Application 02 010 086.3 "Gateway Device" filed on May 6, 2002 by the applicant, which is herewith incorporated by reference into this specification, a gateway device or bridge device is provided which ensures in a particular flexible and reliable manner the connection and communication between different bus systems. The proposed gateway device for connecting and/or communicating between at least a first and a second wired or wireless communication system is a generic gateway device being dynamical and/or adjustable with respect to the addition and/or the removal of at least one wired or wireless communication system, the protocol conversion or protocol conversion data, data stream encoder and/or decoder data, bus or device presentation data, and/or the like.

This property of being a generic gateway device is in particular realized by the dynamical and/or adjustable properties of this gateway device with respect to several properties of the wired or wireless communication systems to be connected to each other. These properties may be the aspects of adding and/or removing one or a plurality of wired or wireless communication systems. Additionally or alternatively, this gateway device is dynamical and/or adjustable with respect to a protocol conversion and/or the respective protocol conversion data describing the protocol conversion. Further additionally or alternatively, this generic gateway device is dynamical and/or adjustable with respect to data describing data stream encoder and/or decoder. Furthermore, the presentation or representation of busses and/or of devices and further aspects are managed in a dynamical and/or adjustable way by this gateway device. Therefore, the gateway device is capable of realizing connections and/or communication, i.e. interfaces to the different physical layers and maps the commands and data, in a flexible and reliable manner.

However, there is a need to guarantee the interoperability of new (in future upcoming) devices and bus systems by utilizing existing infrastructure. Furthermore, it needs to be considered that not all gateways are highly sophisticated, as the one described above in connection with the European Patent Application 02 010 086.3 "Gateway Device". There is a need to incorporate even cheap (dumb) gateway devices in the overall network topology by guaranteeing a high level of future-proof interoperability.

The object is achieved by a gateway device according to the present invention as defined in independent claim 1, an intelligent gateway according to the present invention as defined in independent claim 7, and a superior network according to the present invention as defined in independent claim 13. Preferred embodiments thereof are respectively defined in the respective following subclaims.

Therewith, according to the present invention a gateway device for connecting a respective bus system with a common network layer that is designed to build a superior network by connecting at least one further bus system via at least one further gateway device to said common network layer, said gateway device comprising a bus service interface to access all functionality and commands of a further bus system via said common network layer from an intelligent gateway within said superior network.

Further, according to the present invention an intelligent gateway for communicating between gateway devices, which respectively connect a respective bus system that comprises at least one physical device with a common network layer, is provided that comprises a static or dynamic possibility to provide at least one device presenter and/or at least one device emulator of at least one physical device that wants to communicate via said common network layer.

Still further, according to the present invention a superior network is provided that integrates at least two bus systems, each of which comprises a respective gateway device according to the present invention, and that comprises at least one intelligent gateway according to the present invention, and a common network layer to which the respective gateway devices and said at least one intelligent gateway are connected.

Therefore, according to the present invention, for connecting the different bus systems to each other to build a superior network a common network layer is provided to which the bus systems are connected for data and/or control exchange.

The invention allows the incorporation of cheap (dumb) gateway devices, which just provide the bus API, i.e. a bus service interface to communicate with device specific modules, i.e. device presenters and emulators, and preferably provide corresponding virtual devices to their respectively connected bus system. The communication with the device specific modules might be seen as accessing of all functionality and commands of said common network layer or accessing all functionality and commands of a further bus system via said common network layer. The device specific (software) modules can run distributed on the dynamic or static intelligent gateway according to the present invention or on other intelligent gateway devices.

According to the present invention it is also possible that the common network layer is implemented for "connecting" different protocol types executed on one bus system. In this case the intelligent gateway according to the present invention is used for communicating between gateway devices via said common network layer, which gateway devices respectively connect the same bus system with at least one physical device, but which gateway devices are designed for different protocol types. In this case, the intelligent gateway according to the present invention needs only one physical network adapter.

Further, at least one intelligent gateway according to the present invention is distributed in the superior network, i.e. on the common network layer to which the gateway devices according to the present invention are connected. So this intelligent gateway, which is preferably arranged within a gateway device and then builds a dynamic or static intelligent gateway device, can be accessed on all other gateway devices.

The common network layer might be realized on basis of a suitable bus system which might be additionally provided to the bus systems that are to be connected or which might be based on one or more of these bus systems.

Since isochronous stream data may not easily be distributed over general networks, this kind of data is extracted on the local device and handled by a bus system independent streaming module.

In the gateway device according to the present invention said bus service interface is preferably able to post bus events on said common network layer in case a device within said respective bus system indicates the possibility to communicate via said common network layer.

In the gateway device according to the present invention said bus service interface is alternatively or additionally preferably usable by a device presenter to communicate with the corresponding real, i.e. physical, device connected to said respective bus system.

Alternatively or additionally, in the gateway device according to the present invention said bus service interface is further alternatively or additionally preferably able to represent a virtual device to its respective bus system based on a device emulator.

Further alternatively or additionally, in the gateway device according to the present invention said bus service interface preferably communicates via said common network layer according to the Universal Plug and Play protocol set.

The gateway device according to the present invention preferably comprises an intelligent gateway according to the present invention.

In the intelligent gateway according to the present invention, preferably a device manager monitors bus events for new devices, which are posted on said common network layer, and finds, loads and assigns corresponding device presenters and/or emulators.

The device manager preferably loads device presenters and/or emulators from external sources, like gateway devices, devices or any network locations, e.g. device presenter and/or emulator databases.

In the intelligent gateway according to the present invention, a device presenter preferably presents a real device on a bus system as a generic abstract device or service.

Further, in the intelligent gateway according to the present invention, a device emulator preferably emulates a device on a bus system based on a generic abstract device or service presentation.

Said generic abstract device or service presentation is preferably a presentation according to the Universal Plug and Play protocol set.

Handling device presenters and/or emulators in the context of the present invention means that these device presenters and/or emulators are located, i.e. stored and/or executed, within the intelligent gateway or within an arbitrary gateway device connected to the common network layer and are managed by the device manager. In other words, the common network layer, the intelligent gateway and the part of the gateway devices communicating with the common network layer, i.e. the bus service interface, build an own "plug and play network" for the connected bus systems, i.e. the superior network, so that a respective bus service interface builds a window to a presentation and emulation of the respective other part of the superior network to which it is only connected via the common network layer. Therewith, a gateway device according to the present invention might have, but does not need to have the full capability to present and emulate the respective other part of the superior network to which it is only connected via the common network layer.

For the capability to handle asynchronous communication as well as isochronous streaming follows that the asynchronous communication as well as the control of the streams is managed by the intelligent gateway, i.e. the device presenter and/or emulator, while the isochronous streaming data is extracted in the device where the physical bus interface is located.

Of course, the common network layer might not only connect the different gateway devices and the intelligent gateway, but also devices which are able to communicate on the physical bus supplying said common network layer might be directly connected thereto. In this case the intelligent gateway according to the present invention must be included into a gateway device according to the present invention that needs only one physical network adapter, namely the one to communicate with the physical bus supplying said common network layer

Therewith, an advantage of this invention is that the consumer can utilize cheap (dumb) gateway devices including a bus service interface in combination with at least one intelligent gateway according to the present invention which might also be incorporated into a gateway device according to the present invention in order to achieve a high level of interoperability, i.e. without reducing the level of interoperability. Of course also sophisticated gateway devices might be used according to the present invention and in connection with networks according to the present invention, in particular gateway devices with features as defined in the above referenced European Patent Application 02 010 086.3 "Gateway Device". Such gateway devices are in particular suited to incorporate the intelligent gateway according to the present invention.

The architecture according to the present invention also eases the design of future proof gateway devices and it gives more flexibility in planning, designing and extending the network topologies. The reducing of the cost and complexity for gateway devices without reducing the level of interoperability is allowed.

The present invention, its objects, features and advantages will be better understood from the following detailed description of an exemplary embodiment thereof taken in conjunction with the accompanying figures, in which
- **Fig. 1**: demonstrates an embodiment of the overall architecture of a gateway device according to a preferred embodiment of the present invention that incorporates an intelligent gateway according to the present invention,
- **Fig. 2**: depicts types of gateway devices and intelligent gateways according to the present invention and respective abstract symbols,
- **Fig. 3**: shows an abstract network scenario according to the present invention,
- **Fig. 4**: a more concrete version of the network scenario shown in Fig. 3, and
- **Fig. 5a - f**: illustrate a communication flowchart of an example scenario in the network scenario shown in Figs. 3 and 4.

In the exemplary embodiment of the present invention described hereinafter, the (static or dynamic) intelligent gateway device is also referenced as a gateway device. This is not limiting to the case wherein a gateway device according to the present invention incorporates an intelligent gateway according to the present invention, but also to be understood as stand alone intelligent gateway, i.e. if desired without bus service interface, and (static or dynamic) intelligent gateway device with one physical network adapter.

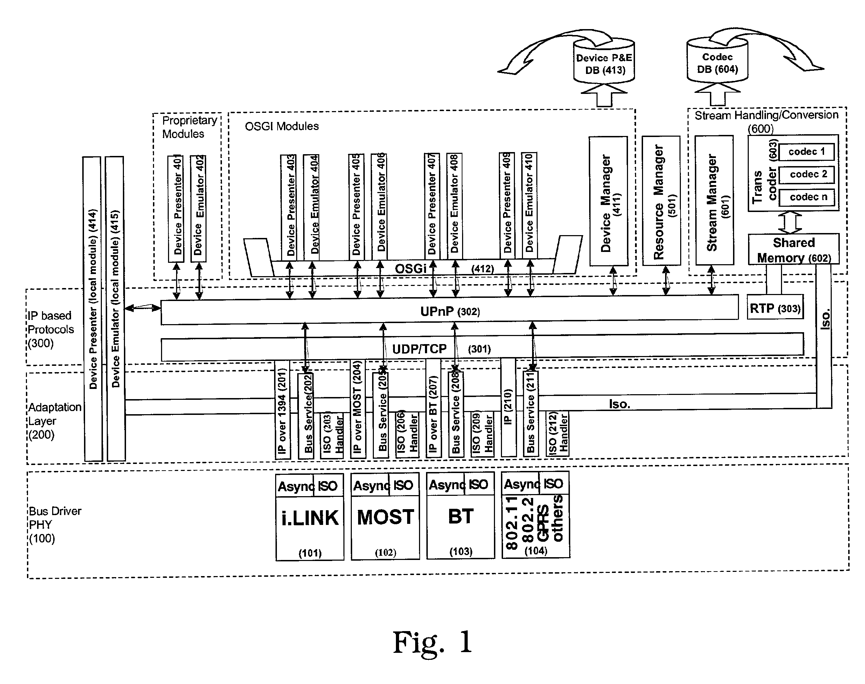

The communication architecture of a generic dynamic intelligent gateway device, i.e. a gateway device suited for many different purposes is shown in figure 1. As stated above, not all shown and described components are necessary for designing a dedicated gateway device with or without bus service module and including an intelligent gateway or not. Wide parts of this dynamic intelligent gateway device and its functionality are also shown and described in the above referenced European Patent Application 02 010 086.3 "Gateway Device".

Beginning from the bottom, there is a bus driver and physical layer 100 containing bus drivers and physical bus interfaces, e.g. an i.LINK (IEEE 1394) interface 101, a MOST interface 102, a BT interface 103, and an interface for others 104, e.g. 802.11 802.2 and GPRS, followed by an adaptation layer 200, which brings all the different transport mechanisms of the bus systems to an abstract level. This abstract level is provided by an isochronous and an asynchronous part. The asynchronous part is given by IP based protocols 300 as UDP/TCP 301 and UPnP 302. A stream handling/conversion block 600 handles the isochronous part whereas the streaming data is handled directly by a shared memory module 602.

The adaptation layer 200 comprises respective adapters for each interface 101-104 to each abstract transport mechanism 301, 302, 602.

In particular for the connection to UDP/TCP 301, i.e. TCP (RFC 793 - Transmission Control Protocol) and UDP (RFC 768 - User Datagram Protocol) which are used as transport protocols on top of IP, an IP over 1394 adapter 201 between the i.LINK interface 101 and UDP/TCP 301, an IP over MOST adapter 204 between the MOST interface 102 and UDP/TCP 301, an IP over BT adapter 207 between the BT interface 103 and UDP/TCP 301, an IP adapter 210 between the interface for others 104 and UDP/TCP 301. These IP adapters 201, 204, 207, 210 ensure the implementation of IP on different bus systems. Such an IP channel is used for the tunnelling of any communication between gateway devices.

Further, for the isochronous part a respective ISO handler 203, 206, 209, 212 is provided between the respective interface 101-104 and the shared memory 602 to handle the streaming data. The shared memory 602 is a module for the handling of the shared memory access used for stream buffering and synchronization. The ISO handlers 203, 206, 209, 212 respectively handle the extraction and insertion of isochronous streams for a bus system. Its operation is controlled by the corresponding bus interface. The isochronous data is directly written to the shared memory module 602 for buffering.

A respective bus service interface 202, 205, 208, 211 according to the present invention is provided between the respective interface 101-104 and UPnP 302, i.e. the Universal Plug and Play protocol set. These bus service interfaces 202, 205, 208, 211 respectively provide an UPnP presentation of a bus system, which is used by the device presenters and device emulators according to the present invention. The Bus Service also controls the handling of isochronous data by the ISO handler.

On top of the IP protocol block 300 the adaptation modules 401-410 according to the present invention for the different devices of a bus system are located. These modules provide the adaptation of the bus specific devices to an abstract device/application level. This second abstraction layer is also provided by UPnP 302, which is indicated by the arrows between UPnP 302 and the respective adaptation module 401-410. UPnP here is a kind of central integration point for both, bus systems on transport level and devices on device/application level. The advantage of using a technology as UPnP here is that UPnP is a protocol based standard, which do not require a specific software environment. The modules therefore may run at any gateway in the network independent from the operating system and the software environment.

In general, based on their implementation, there are two different kind of modules: Proprietary Modules 401, 402 and OSGI Modules 403-410 based on a common platform for distributed applications as OSGI. An OSGI module is running on any gateway platform providing a corresponding standardized software platform as Java/OSGI 412 and has to be implemented only once. On the other hand, a proprietary module may be implemented in any language for any operating system. It has to be provided for any gateway platform separately but is fully free in the choice of the software environment. For the purpose of reusing existing code there is also a third category called local module 414, 415 at the left hand of the architecture figure. These modules do not have the abstraction of the transport mechanism. They are using the corresponding bus driver and physical layer 100 directly and are therefore not able to run transparent within the network.

Further, based on their functionality, there are also two different kind of modules: Device presenters 403, 405, 407, 409, 401, 414 which are respectively presenting a real device on a bus system as a generic UPnP device/service, and device emulators 404, 406, 408, 410, 402, 415 which are respectively emulating a device on a bus system based on a generic UPnP presentation of a device/service. Therewith, according to the present invention, each device or function thereof is preferably logically substituted by one device presenter for each physical device and one device emulator for each bus system.

The device manager 411 according to the present invention which is used for finding, loading and assigning device presenter and emulator modules for the devices found on the bus systems is also connected to the UPnP 302.

For handling the isochronous connections, a stream manager 601 used for establishing a streaming connection between two devices in a network of gateway devices is provided additionally to the shared memory 602 within the streaming handling/conversion block 600. The stream manager 601 is also connected to the UPnP 302. Further, the streaming handling/conversion block 600 comprises a transcoder 603 the encoding, decoding and transcoding of audio and video streams. The transcoder might comprise several codecs.

The shared memory 602 is further connected to a RTP 303, i.e. Real-time Transport Protocol, e.g. according to RFC 1889 - RTP: A Transport Protocol for Real-Time Applications, which is used as the default streaming mechanism between gateway devices if no isochronous transport channel is available.

Further, the gateway device has a device P&E DB 413, i.e. an external or internal database providing device emulator and presenter modules, and a codec DB 604, i.e. an external or internal database providing codecs for en-, de-, and transcoding of audio and video.

All these components of the gateway device are controlled by a resource manager 501 for the handling and presentation of all gateway resources including memory, computing resources, number of isochronous channels on a bus system, bandwidth, codec availability, etc.

In consideration of the requirements of the gateway architecture there are in general two gateway types with different specifications. It can be distinguished between a dumb gateway device, which includes the bus service but no device manager and not necessarily device presenter and/or device emulator modules and an intelligent gateway with device presenter and/or emulator module(s) and preferably device manager. The intelligent gateway might be incorporated into a gateway device according to the present invention and then has optional the bus service too.

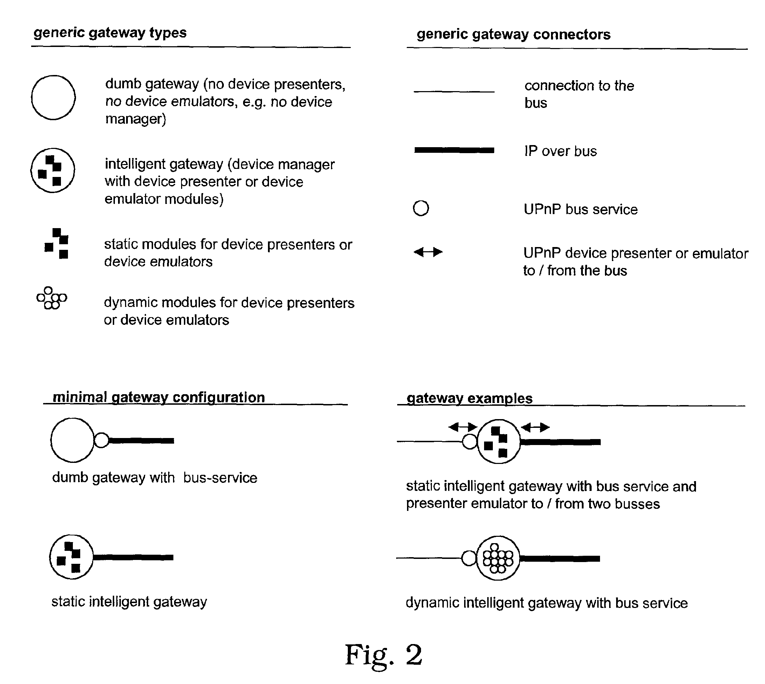

Different gateway device and intelligent gateway types, connectors therefore and combinations of them are shown in figure 2 together with corresponding abstract symbols.

A dumb gateway device is shown as a big empty circle, an intelligent gateway as big circle with a group of filled squares or a group of empty small circles inside, depending on the kind of included modules, namely static modules for device presenters or device emulators are depicted as a group of filled squares and dynamic modules for device presenters or device emulators are depicted as a group of small empty cycles. A connection to the bus system is shown as thin line, an IP over bus connection is shown as bold line, the possibility for UPnP bus service, i.e. the bus service interface according to the present invention, is shown as midsize empty circle, and the communication direction of UPnP device presenter or emulator modules to/from the bus is depicted as arrow, i.e. arrow for a respective direction or double arrow for communication in both directions.

As minimal gateway configurations a dumb gateway device, i.e. big empty circle, with bus service interface, i.e. attached midsize empty circle, and corresponding bus, i.e. bold line attached to the midsize circle, and a static intelligent gateway, i.e. a big circle with a group of filled squares inside and corresponding bus, i.e. attached bold line, are shown. The bus service interface must not necessarily be arranged at the IP over bus connection side, i.e. the connection of the dumb gateway device to the common network layer, but might also be arranged at the connection of the dumb gateway device to its bus system. Also, as mentioned above, it is possible that the bus system to which a dumb or intelligent gateway device is connected forms the basis for the common network layer.

As gateway example a static intelligent gateway device with bus service interface and device presenter/emulator modules to/from two busses is shown, i.e. a big circle with a group of filled squares inside with a directly attached bold line and a directly attached midsize circle to which a thin line is attached, where a respective double arrow is arranged above the attachment points of the lines.

As further gateway example a dynamic intelligent gateway device with bus service interface is shown, i.e. a big circle with a group of empty small cycles inside with a directly attached bold line and a directly attached midsize circle to which a thin line is attached.

From the minimal gateway configuration it can be seen that both gateway types must have a connection to their bus where an IP transport is available. This so called IP connection is used to establish the abstract communication and device cloud between all gateways. This is the minimum requirement for all gateway types. In case of the dumb gateway device there must be at least one bus service interface available. This characteristic is optional for the intelligent gateways. It is also possible to build a module gateway, i.e. including the intelligent gateway according to the present invention, without a bus-service interface which presents all devices of a bus/network to the abstract UPnP layer, but including the device manager which monitors bus events for new devices, which are posted on said common network layer, and which finds, loads and assigns corresponding device presenters and/or emulators. In this case, the intelligent gateway needs not to be included in a gateway device, but can be realized as "stand alone device", since no bus system is connected thereto (apart from the bus based on which the common network layer is realized, but here is no bus service needed from the side of the intelligent gateway).

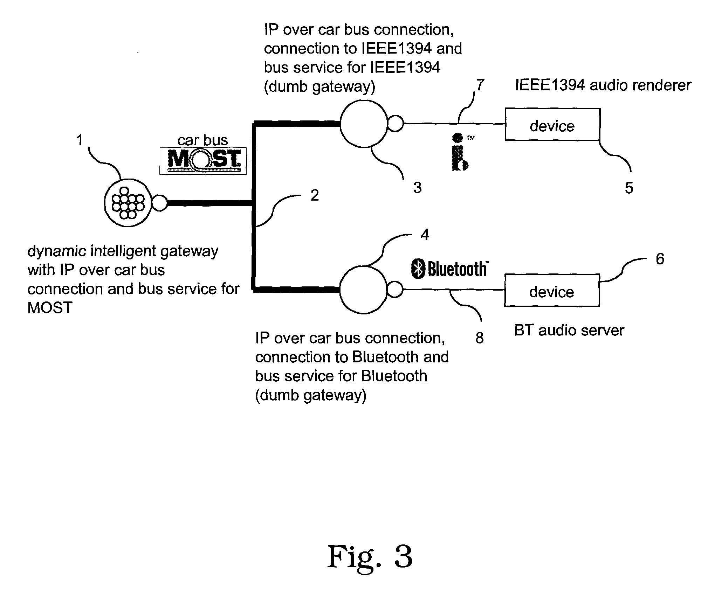

Figure 3 shows an abstract network scenario, i.e. a network scenario in the notation shown in figure 2. Generally, the gateway architecture according to the present invention allows very flexible scenarios, e.g. with just some dumb gateway devices and at least one intelligent gateway the architecture allows intercommunication between devices located in different bus/network-systems.

Figure 3 shows one dynamic intelligent gateway 1 with an IP connection to a car bus 2, i.e. the common network layer, and no native connection, i.e. no bus system connected. This 'gateway' might be realized as stand alone intelligent gateway, i.e. preferably comprises the device manager and, since it is a dynamic device, has the possibility to load and execute device presenters and/or emulators. Connected to the car bus 2 are two dumb gateway devices with bus service interface, i.e. a first dumb gateway device 3 with bus service interface, which connects an IEEE 1394 headunit 5, i.e. audio renderer, via an IEEE 1394 bus, i.e. first bus system, 7 to the car bus 2, and a second dumb gateway device 4 with bus service interface which connects a BT player, i.e. audio server, via a Bluetooth network, i.e. second bus system, 8 to the car bus 2.

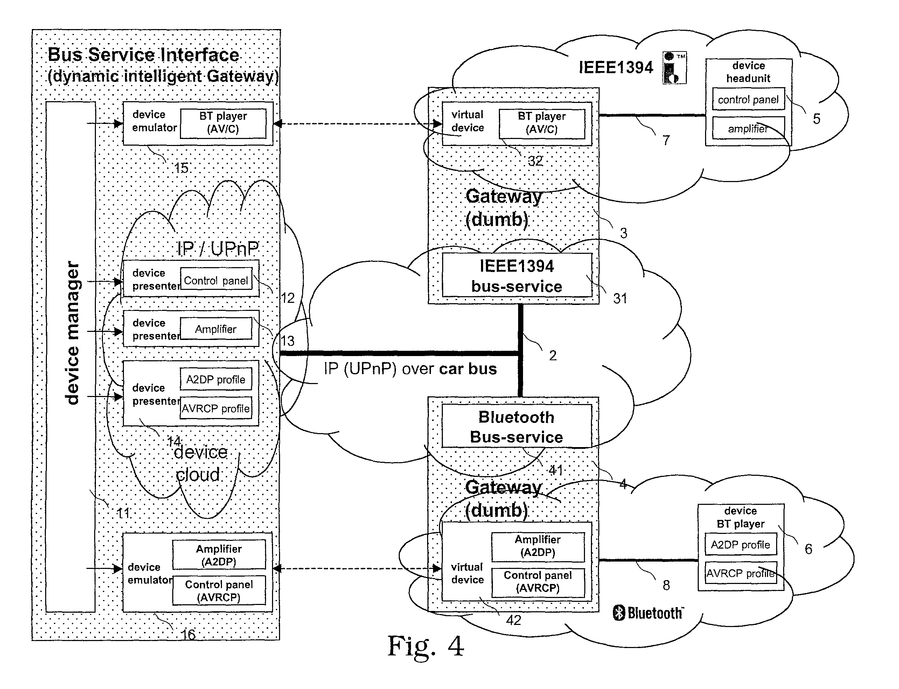

Figure 4 shows the network scenario shown in figure 3 in more detail, i.e. focuses into the gateway devices and the intelligent gateway. Both dumb gateway devices 3, 4 just offer a bus-service, i.e. the first dumb gateway 3 via an IEEE 1394 bus service interface 31, and the second dumb gateway 4 via a Bluetooth bus service interface 41. With this bus service the access to all bus functionality and commands is given. This bus service is discovered by the UPnP technology. In the module gateway, i.e. the dynamic intelligent gateway 1 according to the present invention, a device manager 11 can be found which gets bus events for new devices from the respective bus service. After an event is received the device manager 11 loads the device presenter for the corresponding device. This device presenter uses also the bus service interface of the dumb gateway to communicate with the real device. UPnP also discovers these device presenters and their services. At this state there is an UPnP cloud that includes all devices of all different busses/networks. In the shown case the IEEE 1394 headunit 5 comprises a control panel and an amplifier, which both supply an own device presenter, i.e. a first device presenter 12 for the control panel and a second device presenter 13 for the amplifier, which are loaded into the dynamic intelligent gateway 1 and connected to the device manager 11. The BT player 6 comprises an A2DP profile and an AVRCP profile which provide one common device presenter, i.e. the third device presenter 14 for A2DP profile and AVRCP profile, which is loaded into the dynamic intelligent gateway 1 and connected to the device manager 11. Further, the dynamic intelligent gateway 1 comprises a first device emulator 15 emulating the BT player 6 and a second device emulator 16 emulating the headunit 5, i.e. the amplifier and the control panel thereof. This first device emulator 15 presents a corresponding first virtual device 32 into the first dumb gateway device 3, i.e. to the IEEE 1394 bus 7, and this second device emulator 16 presents a corresponding second virtual device 42 into the second dumb gateway device 4, i.e. to the Bluetooth bus 8. The first and second virtual devices 32, 42 are shown in the respective dumb gateway devices and connected to the respective corresponding device emulator by a respective dotted double arrow, but this represents only a logical state, since the virtual devices are in fact presented over the respective bus service interfaces 31, 41.

The bus-services are generally also listening for new UPnP devices of the cloud and request device emulators for all unknown devices. This time the device manager is loading suited device emulators for the different busses/networks. These device emulators represent over the bus-service virtual devices into their busses/networks.

The physical devices connected to a respective bus system can then communicate with the physical devices connected to another bus system by simply addressing the corresponding virtual devices presented over the bus service interface of the gateway device connecting the respective bus system to the common network layer. In figure 4, the headunit 5 simply addresses the first virtual device 32 to communicate with the BT player 6, and the BT player 6 simply addresses the second virtual device 42 to communicate with the headunit 5. A physical device 5, 6 is not aware that such a communication is not directly performed with another physical device 6, 5.

Now one transparent interoperable communication network is established.

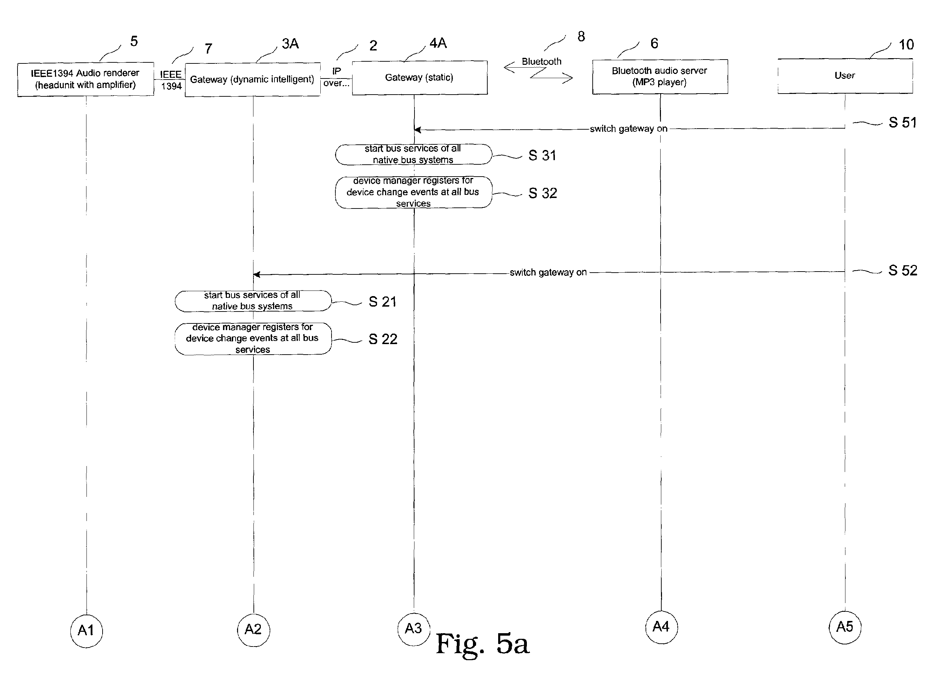

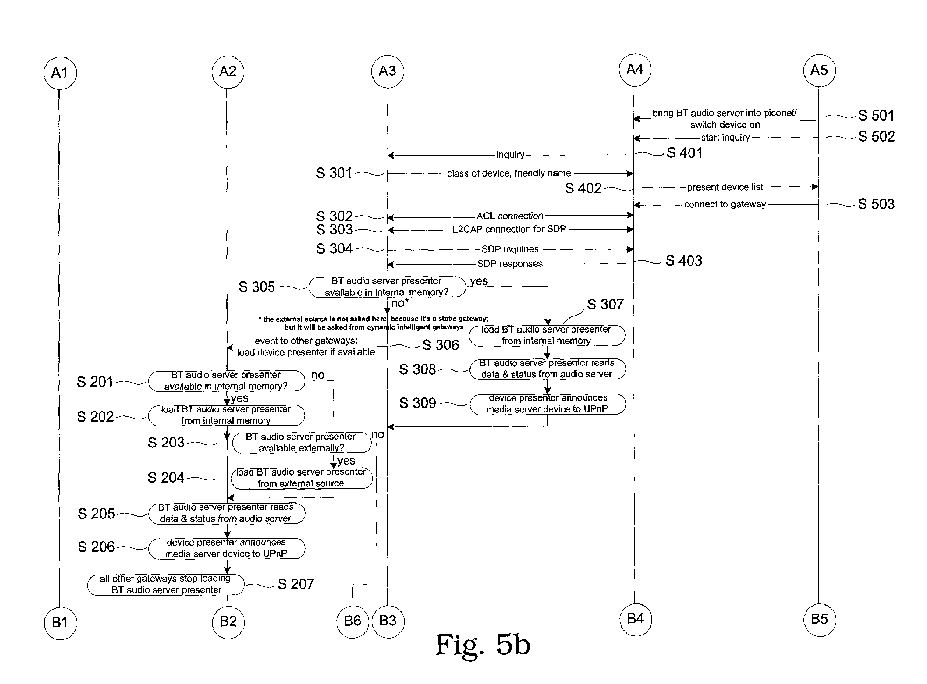

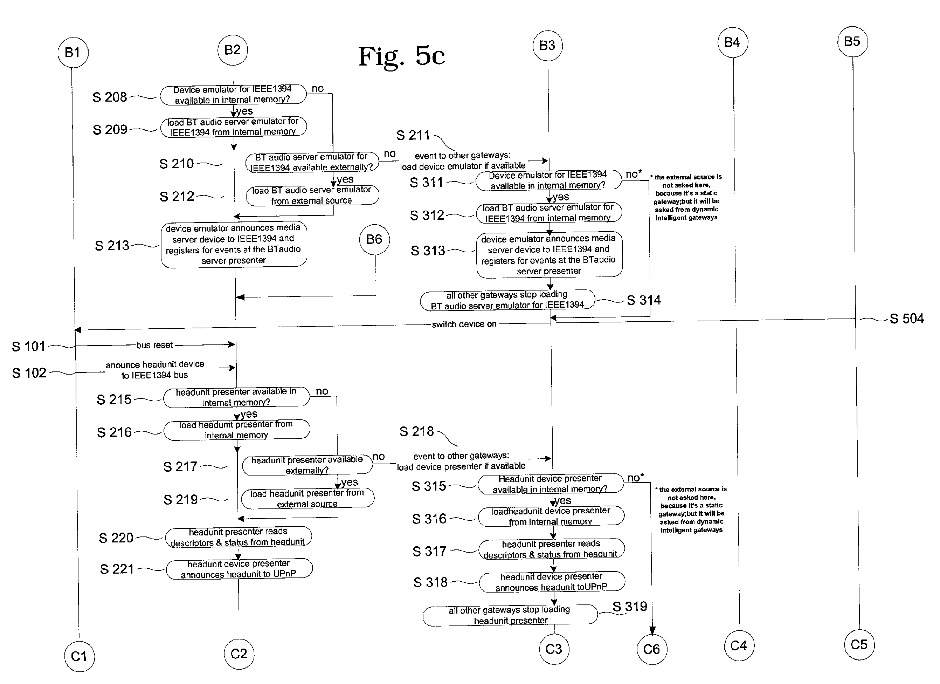

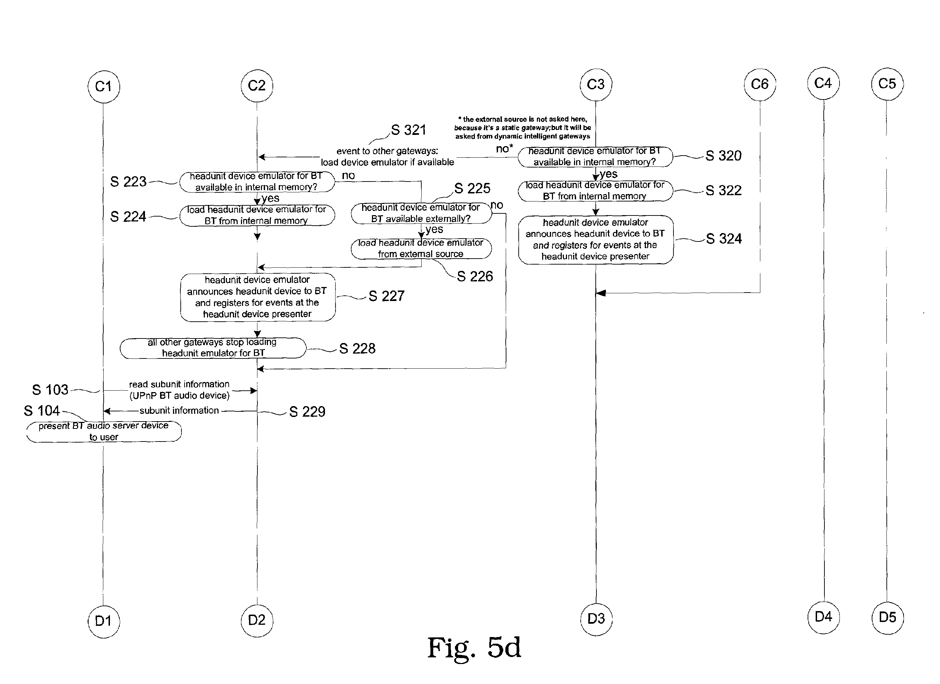

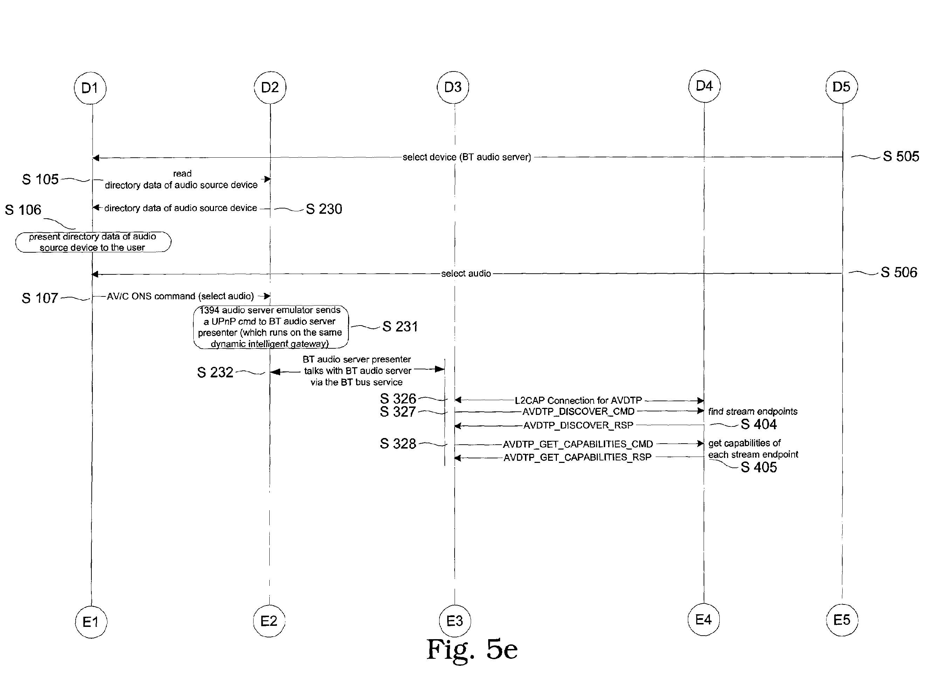

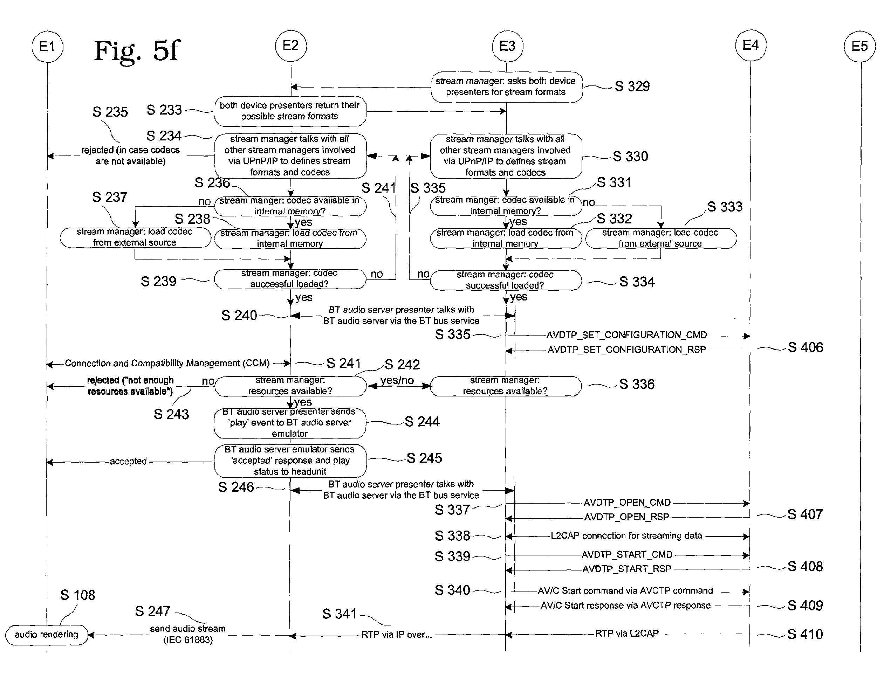

The sequence chart in Figure 5 shows the phases that are involved in a scenario where a static gateway device and a dynamic intelligent gateway device are merging a 1394 bus and a Bluetooth piconet. The sequence chart describes a scenario in which a user wants to play a piece of music from his portable Bluetooth player on an amplifier that is part of a 1394 ensemble. Because the amplifier does not have a Bluetooth interface, the gateway devices need to allow this operation. This network scenario is more or less the one shown in figures 3 and 4 with the difference that the dynamic intelligent gateway 1 is not a stand-alone device, but is incorporated into the first dumb gateway device 3 connecting the IEEE 1394 bus 7 and the car bus 2. Therefore, in the following this gateway will be referred to as second dynamic intelligent gateway device 3A. Further, the second dumb gateway device shown in figures 3 and 4 is now a static intelligent gateway device, i.e. has the possibility to statically store and execute device presenters and/or emulators which are handled by a device manager, but is not able to find and load them. Therefore, in the following this gateway device will be referred to as static gateway device 4A.

The sequence chart of Figures 5a to f shows the phases that are involved in a scenario where the second dynamic intelligent gateway device 3A merges the IEEE 1394 bus to which it is connected and a Bluetooth piconet that comprises the static gateway device 4A. Both, the second dynamic intelligent gateway device 3A and the static gateway device 4A are connected to a common network layer IP over an arbitrary carrier, referenced to as IP over ... 2. The sequence chart describes a scenario in which a user 10 wants to play a piece of music from his portable Bluetooth MP3 player, here also referred to as Bluetooth or BT audio server 6, on an amplifier of a headunit, here also referred to as IEEE 1394 audio renderer or audio renderer 5, that is part of a IEEE 1394 ensemble connected to the second dynamic intelligent gateway device 3A. Because the amplifier does not have a Bluetooth interface, the second dynamic intelligent gateway device 3A is needed to allow this operation.

As can be seen in Figure 5a to f, in a first step S51 the user 10 switches on the static gateway device 4A. The static gateway device 4A starts the bus services of all native bus systems as an UPnP service in a following step S31 and thereafter the device manager of the static gateway device 4A registers for all 'device change' events at all bus services in a step S32. Then, the second dynamic intelligent gateway device 3A is switched on by the user 10 and the same procedure happens, i.e. the second dynamic intelligent gateway device 3A starts the bus services of all native bus systems as an UPnP service in a following step S21 and thereafter the device manager of the second dynamic intelligent gateway device 3A registers for all 'device change' events at all bus services in a step S22.

Then, the user switches on the portable Bluetooth audio server 6 in a step S501 and starts an inquiry on the Bluetooth piconet, which is directed to the Bluetooth audio server 6 in a following step S502 and thereafter redirected from this device to the static gateway device 4A in a step S401. Thereafter the static gateway device 4A answers with a friendly name to the Bluetooth audio server 6 in a step S301 and in the following a Bluetooth device list is presented to the user 10 by the Bluetooth audio server 6 in a step 402, the user 10 initiates the connection of the Bluetooth audio server 6 via the Bluetooth air interface to the static gateway device 4A in a step S503. Thereafter, the Bluetooth piconet between the Bluetooth audio server 6 and the static gateway device 4A with ACL connection, L2CAP connection for SDP, SDP inquiries and responses is established in steps S302, S303, S304, and S403.

The static gateway device 4A recognizes the audio functionality of the Bluetooth audio server 6, and thereafter looks up in his memory for an available corresponding device presenter in a step S305 and - if available - loads the BT audio server presenter from the internal memory in a step S307, which reads data and status from the audio server in step S308 and announces the media server device, i.e. the Bluetooth audio server 6, to UPnP in a step S309.

In this case of a static gateway device 4A, the device presenter cannot be loaded from an external source. This would be done from a corresponding dynamic intelligent gateway device.

At the time a module (presenter or emulator) can not be loaded by a gateway device, here by the static gateway device 4A in step S305, an event is posted to all other gateway devices wherein these are asked to load that module, in this case an event to load the corresponding device presenter, if available, in a step S306. In this case only the second dynamic intelligent gateway device 3A is asked, since this is the only other gateway device.

The second dynamic intelligent gateway device 3A recognizes the event, and thereafter looks up in his memory for an available corresponding device presenter in a step S201 and - if available - loads the BT audio server presenter from the internal memory in a step S202. If the corresponding device presenter is not available in step S201, it is checked in a following step S203 if the device presenter can be loaded from an external source, e.g. other gateways, devices, the internet, ... , which loading is executed in a following step S204, if possible. The internally or externally loaded BT audio server presenter reads data and status from the audio server in step S205 and announces the media server device, i.e. the Bluetooth audio server 6, to UPnP in a step S206. Thereafter, it is announced to all other gateways to stop the loading of a corresponding BT audio server presenter in a step S207.

If the loading of the device presenter from an external source is also not possible in step S203, the operation continues without the loading of the device emulator for that particular bus system described in the following, i.e. after a step S213 in which the internally or externally loaded audio player emulator for IEEE 1394 would announce the media server device, if a device emulator would be loaded.

Now, the new audio player device needs to be mapped in all networks. Therefore, all gateway devices check, if the new device is already presented in the respectively connected bus systems, or not. If not, the loading of the device emulator for that particular bus system is initiated.

In the shown example, it is checked in a step S208 whether an audio player emulator for IEEE 1394 is available in the internal memory of the second dynamic intelligent gateway device 3A and - if available - the audio player emulator for IEEE 1394 is loaded from the internal memory in a step S209. If the audio player emulator for IEEE 1394 is not available in step S208, it is checked in a following step S210 if the audio player emulator for IEEE 1394 can be loaded from an external source, which loading is executed in a following step S212, if possible. The internally or externally loaded audio player emulator for IEEE 1394 announces the media server device, i.e. the Bluetooth audio server 6, to IEEE 1394 and registers for events at the corresponding device presenter, here the BT audio server presenter, in a step S213.

Since at the time a module (presenter or emulator) can not be loaded by a gateway device, here by the second dynamic intelligent gateway device 3A in step S210, an event is posted to all other gateway devices wherein these are asked to load that module, in this case an event to load the audio player emulator for IEEE 1394, if available, in a step S211. In this case only the static gateway device 4A is asked, since this is the only other gateway device.

Therefore, it is checked in a step S311 whether an audio player emulator for IEEE 1394 is available in the internal memory of the static gateway device 4A and - if available - the audio player emulator for IEEE 1394 is loaded from the internal memory in a step S312. If the audio player emulator for IEEE 1394 is not available in a step S311, the audio player emulator for IEEE 1394 cannot be loaded from an external source, since this is only possible for dynamic intelligent gateway devices. The internally loaded audio player emulator for IEEE 1394 announces the media server device, i.e. the Bluetooth audio server 6, to IEEE 1394 and registers for events at the corresponding device presenter, here the BT audio server presenter, in a step S313. Thereafter, it is announced to all other gateway devices to stop the loading of a corresponding audio player emulator for IEEE 1394 in a step S314.

Now the user switches on the IEEE 1394 audio renderer 5 in a step S504, which leads to a following bus reset in step S101 and thereafter to the announcement of the connected devices to the IEEE 1394 bus in step S102. Now, the same procedure for loading the device presenter (S215 ... S222, S315 ... S319) and loading the device emulator for the BT piconet (S223 ... S228, S320 ... S325) starts. Also these modules could run on any gateway device.

Therefore, the second dynamic intelligent gateway device 3A that recognized the IEEE 1394 audio renderer 5 looks up in his memory for an available corresponding device presenter in a step S215 and - if available - loads the audio renderer presenter from the internal memory in a step S216. If the corresponding device presenter is not available in step S215, it is checked in a following step S217 if the device presenter can be loaded from an external source, which loading is executed in a following step S219, if possible. The internally or externally loaded audio renderer presenter reads descriptors and status from the IEEE 1394 audio renderer 5 in step S220 and announces the IEEE 1394 audio renderer 5 to UPnP in a step S221.

Since, at the time a module (presenter or emulator) can not be loaded by a gateway device, here by the second dynamic intelligent gateway device 3A in step S217, an event is posted to all other gateway devices wherein these are asked to load that module, in this case an event to load the corresponding device presenter, if available, in a step S218. In this case only the static gateway device 4A is asked, since this is the only other gateway device.

The static gateway device 4A recognizes the event, and thereafter looks up in his memory for an available corresponding device presenter in a step S315 and - if available - loads the audio renderer presenter from the internal memory in a step S316. The internally loaded audio renderer presenter reads descriptors and status from the audio renderer in step S317 and announces the IEEE 1394 audio renderer 5 to UPnP in a step S318. Thereafter, it is announced to all other gateways to stop the loading of a corresponding audio renderer presenter in a step S319.

In this case of a static gateway device 4A the device presenter cannot be loaded from an external source. Therefore, also in case no audio renderer presenter is present in its internal memory in step S315, the operation continues without the loading of the device emulator for that particular bus system described in the following, i.e. after a step S324 in which the internally loaded audio renderer emulator for BT would announce the audio renderer device, if a device emulator would be loaded.

Now, the new audio renderer device needs to be mapped in all networks. Therefore, all gateway devices check, if the new device is already presented in the respectively connected bus systems, or not. If not, the loading of the device emulator for that particular bus system is initiated.

In the shown example, it is checked in a step S320 whether a audio renderer emulator for BT is available in the internal memory of the static gateway device 4A and - if available - the audio renderer emulator for BT is loaded from the internal memory in a step S322. If the audio renderer emulator for BT is not available in step S320, it cannot be loaded from an external source, since this processing is executed by the static gateway device 4A. The internally loaded audio renderer emulator for BT announces the IEEE 1394 audio renderer 5 to BT and registers for events at the corresponding audio renderer presenter in a step S324.

Since at the time a module (presenter or emulator) can not be loaded by a gateway device, here by the static gateway device 4A in step S320, an event is posted to all other gateway devices wherein these are asked to load that module, in this case an event to load the audio renderer emulator for BT, if available, in a step S321. In this case only the second dynamic intelligent gateway device 3A is asked, since this is the only other gateway device.

Therefore, it is checked in a step S223 whether a audio renderer emulator for BT is available in the internal memory of the second dynamic intelligent gateway device 3A and - if available - the audio renderer emulator for BT is loaded from the internal memory in a step S224. If the audio renderer emulator for BT is not available in step S223, it is checked in a following step S225 if the audio renderer emulator for BT can be loaded from an external source, which loading is executed in a following step S226, if possible. The internally or externally loaded audio renderer emulator for BT announces the IEEE 1394 audio renderer 5 to BT and registers for events at the corresponding device presenter, here the audio renderer device presenter, in a step S227. Thereafter, it is announced to all other gateway devices to stop the loading of a corresponding audio renderer emulator for BT in a step S228. If the audio renderer emulator for BT can also not be loaded from an external source in step S225, the process continues thereafter nevertheless similar as in the case in which an external or internal loading was possible, i.e. after step S228.

After the IEEE 1394 audio renderer 5 has read the basic subunit information from the BT audio source device, i.e. the BT audio server 6, simply by addressing the (virtual device representing the BT audio server 6 on basis of the corresponding device emulator within the bus service interface of the) second dynamic gateway device 3A in a following step S103, the IEEE 1394 audio renderer 5 is now able to present the BT audio server 6 to the user 10 in a step S 104. If the BT audio server 6 is then selected by the user in a following step S505, the IEEE 1394 audio renderer 5 reads the directory data of the BT audio server 6 from the device emulator module managed e.g. on the second dynamic intelligent gateway device 3A in a step S105 and the directory data of the BT audio server 6 is communicated from the second dynamic intelligent gateway device 3A to the IEEE 1394 audio renderer 5 in a step S230. Managed in this context means that the device emulator module can be loaded and executed on every gateway connected to the common IP over ... bus, but can be addressed by simply communicating with the second dynamic intelligent gateway 3A. Thereafter, the directory data of the BT audio server 6 is presented to the user 10 in a step S106.

From the above description follows that in case a device presenter could not be loaded for a device, no device emulator will be loaded for that device. For example, in case it is recognized by the static gateway 4A in step S305 that the BT audio server presenter could not be loaded internally, and in the following it is recognized by the second dynamic gateway 3A in step S203 that the BT audio server presenter could also not be loaded externally, the loading of the corresponding device emulator is not initiated. In such a case that no device emulator for other bus systems is available, the corresponding device will not be seen as virtual device in these other bus systems or by the intelligent gateway according to the present invention. Therefore, in the given example, the user would not be able to select the BT audio server 6 in step S505, as described above. Of course, without the possibility of the selection of the device, also the audio selection and the audio rendering described in the following would not be possible.

After the user makes an audio selection in a following step S506, an AV/C object number select command (ONS) is sent to the 1394 audio server emulator in a step S107. The audio server emulator in turn is sending the corresponding UPnP command to the BT audio server presenter module, which might run on the same second dynamic intelligent gateway device 3A, in a step S231. The BT audio server emulator talks via the BT bus service, which might run on the static gateway device 4A, with the BT audio server device in order to find the stream endpoints and the capabilities of the stream endpoints. Therefore, it addresses the static gateway device 4A in a step S232, which then sets up a L2CAP connection for AVDTP with the BT audio server 6 in a first step S326 and to find the stream endpoints posts an AVDTP_DISCOVER_CMD command to the BT audio server 6 in a second step S327 and receives an AVDTP_DISCOVER_RSP response from the BT audio server 6 in a third step S404, and to get the capabilities of the stream endpoints posts an AVDTP_GET_CAPABILITIES_CMD command to the BT audio server 6 in a fourth step S328 and receives an AVDTP_GET_CAPABILITIES_RSP response from the BT audio server 6 in a fifth step S405.

Then, the stream manager in the static gateway device 4A asks both device presenters, i.e. the audio server presenter and the audio renderer presenter, for their supported stream formats in a step S329 via the second dynamic intelligent gateway device 3A, receives then the possible stream formats from both device presenters in a step S233, and negotiates on the stream format and codecs for this transmission by communicating with the stream managers in the other gateway devices via UPnP, here with the one in the second dynamic intelligent gateway device 3A. Therefore, in initial steps S330 and S234 both stream managers agree on certain codecs, check thereafter in steps S331 and S236 whether or not the appropriate codecs are available in its respective internal memory, and load them then respectively either from the respective internal memory in steps S332 and S238 or if not available from an external source in steps S333 and S237. In final steps S334 and S239 it is respectively decided whether or not the respective stream manager could load the respective codec successful. In case one or both codec(s) could not be loaded successfully the respective stream manger tries to negotiate on other formats or tries to load the codecs on other gateway devices, i.e. the process flow continues again with the initial steps S330 and S234 to proceed to the final steps S334 and S239. If this is also not possible, the stream manager of the second dynamic intelligent gateway device 3A rejects the AV/C ONS command to the IEEE 1394 audio renderer 5 in a step S235.

If all codecs are loaded successfully, the Bluetooth audio server presenter talks with the BT audio server via the BT bus service in a step S240 and sends via the bus service a AVDTP_SET_CONFIGURATION_CMD command to the Bluetooth audio server 6 in a step S335 and the Bluetooth audio server 6 then acknowledges the configuration settings via the bus service by sending a AVDTP_SET_CONFIGURATION_RSP response in a step S406.

The IEEE 1394 audio renderer presenter then establishes a connection with the audio renderer by using CCM (Connection and compatibility management) commands in a step S241.

In the following both stream managers negotiate whether or not there are enough resources available in the respective networks in steps S336 and S242. If there are not enough resources to perform the audio streaming, the AV/C ONS command is rejected to the IEEE 1394 audio renderer 5 in a step S336.

If there are sufficient resources, the BT audio server presenter sends the 'play' event to the BT audio server emulator in a step S244 and the BT audio server emulator then sends the 'accepted' response and the 'play' status to the audio renderer in a step S245.

Then, the Bluetooth audio server presenter sends talks with the BT audio server via the BT bus service in a step S246 and therefore communicates commands via the BT bus service to the Bluetooth audio server 6 in order to open and start the stream. These are respectively answered and acknowledged by the audio server. In particular, the BT audio server presenter first sends an AVDTP_OPEN_CMD command to the BT audio server 6 in a step S337 and receives an AVDTP_OPEN_RSP response from the BT audio server 6 in a step S407. Then, a L2CAP connection for streaming data is established by the audio server presenter in a step S338, after which the BT audio server presenter sends an AVDTP_START_CMD command to the BT audio server 6 in a step S339 and receives an AVDTP_ START _RSP response from the BT audio server 6 in a step S408. Finally, the BT audio server presenter sends an AV/C start command via AVCTP command to the BT audio server 6 in a step S340 and receives an AV/C start response via AVCTP response from the BT audio server 6 in a step S409.

Then the audio server starts sending the audio stream data via RTP/L2CAP to the static gateway device 4A in a step S410. The codec of the static gateway device 4A encodes the received audio stream into RTP via IP over ... and communicates it to the second dynamic intelligent gateway device 3A, which codec will decode the received SBC audio data to PCM audio data which will be send in the IEC61883 format on IEEE 1394 to the audio renderer in a step S247.

The audio renderer then performs the audio rendering based on the received data in a step S108.

Therefore, in general, according to the present invention, for connecting the different bus systems to each other to build a superior network, a common network layer is provided to which the bus systems are connected for data and/or control exchange via gateway devices. Further, an intelligent gateway according to the present invention is distributed in the network, i.e. on the common network layer to which the gateway devices according to the present invention are connected. So this intelligent gateway can be accessed on all gateway devices. This allows the incorporation of cheap (dumb) gateway devices, which just provide the bus API, i.e. a bus service interface. Device specific (software) modules can run distributed on other intelligent gateway devices or on the intelligent gateway.

## Claims

1. Gateway device (3; 4) for connecting a respective bus system (7; 8) with a common network layer (300) that is designed to build a superior network by connecting at least one further bus system (8; 7) via at least one further gateway device (4; 3) to said common network layer (300), said gateway device (3; 4) comprising a bus service interface (31; 41) to access all functionality and commands of a further bus system (8; 7) via said common network layer (300) from an intelligent gateway (1) within said superior network.

2. Gateway device according to claim 1, **characterized in that** said bus service interface (31; 41) is able to post bus events on said common network layer (300) in case a device (5; 6) within said respective bus system (7; 8) indicates the possibility to communicate via said common network layer (300).

3. Gateway device according to claim 1 or 2, **characterized in that** said bus service interface (31; 41) is usable by a device presenter (12, 13; 14) to communicate with the corresponding real device (5; 6) connected to said respective bus system (7; 8).

4. Gateway device according to anyone of claims 1 to 3, **characterized in that** said bus service interface (31; 41) is able to represent a virtual device (32; 42) to its respective bus system (7; 8) based on a corresponding device emulator (15; 16).

5. Gateway device according to anyone of claims 1 to 4, **characterized in that** said bus service interface (31; 41) communicates via said common network layer (300) according to the Universal Plug and Play protocol set.

6. Gateway device according to anyone of claims 1 to 5, **characterized by** an intelligent gateway according to anyone of claims 7 to 12.

7. Intelligent gateway (1) for communicating between gateway devices (3; 4), which respectively connect a respective bus system (7; 8), which comprises at least one physical device (5; 6), with a common network layer (300), comprising a static or dynamic possibility to provide at least one device presenter (12, 13; 14) and/or at least one device emulator (16; 15) of at least one physical device (5; 6) to said common network layer (300).

8. Intelligent gateway according to claim 7, **characterized by** a device manager (11) that monitors bus events for new devices, which are posted on said common network layer (300), and finds, loads and assigns corresponding device presenters and/or emulators.

9. Intelligent gateway according to claim 8, **characterized in that** said device manager (11) loads device presenters and/or emulators from external sources.

10. Intelligent gateway according to anyone of claims 7 to 9, **characterized in that** a device presenter presents a real device on a bus system as a generic abstract device or service.

11. Intelligent gateway according to anyone of claims 7 to 10, **characterized in that** a device emulator emulates a device on a bus system based on a generic abstract device or service presentation.

12. Intelligent gateway according to claim 10 or 11, **characterized in that** said generic abstract device or service presentation is a presentation according to the Universal Plug and Play protocol set.

13. Superior network that integrates at least two bus systems, each of which comprises a respective gateway device according to one of claims 1 to 6, comprising
at least one intelligent gateway according to anyone of claims 7 to 12, and
a common network layer (300) to which the respective gateways and said at least one intelligent gateway are connected.
